# EUROPÄISCHE PATENTSCHRIFT

(11) **EP 0 849 579 B1**
(45) Veröffentlichungstag und Bekanntmachung des Hinweises auf die Patenterteilung: **29.08.2001**
(21) Anmeldenummer: 97120983.8
(22) Anmeldetag: 28.11.1997
(51) Int. Cl.: G01M 1/22, G01M 1/02

(54) **Verfahren und Vorrichtung zum Auswuchten eines aus Luftreifen und Scheibenrad bestehenden Kraftfahrzeugrades**
Procedure and device for balancing a vehicle wheel having a tyre and a rim
nProcédé et dispositif d'équilibrage d'une roue de véhicule comprenant un pneu et une jante

(30) Priorität: 20.12.1996 DE 19653663
(43) Veröffentlichungstag der Anmeldung: 24.06.1998
(73) Patentinhaber: Snap-On Deutschland Holding GmbH, 40822 Mettmann (DE)
(72) Erfinder: Diez, Ulrich, 51580 Reichshof (DE)
(74) Vertreter: Nöth, Heinz, Dipl.-Phys.

(56) Entgegenhaltungen:
- DE-A- 4 229 865

## Beschreibung

Die Erfindung betrifft ein Verfahren und eine Vorrichtung zum Auswuchten eines aus Luftreifen und Scheibenrad bestehenden Kraftfahrzeugrades, bei denen das Kraftfahrzeugrad auf einer Meßspindel einer Auswuchtmaschine aufgespannt wird, die geometrischen Daten des Kraftfahrzeugrades mit Hilfe einer Abtasteinrichtung abgetastet und gespeichert werden, wenigstens ein Meßlauf zur Ermittlung einer Unwucht und Bestimmung wenigstens eines Ausgleichsvektors unter Auswertung der von Meßwertgebern abgegebenen Meßsignale und der geometrischen Daten des Rades in Abhängigkeit von einem eingestellten Ausgleichsprogramm durchgeführt wird, und wenigstens ein Ausgleichsgewicht zur Kompensation der ermittelten Unwucht am Kraftfahrzeugrad befestigt wird. Ein derartiges Verfahren und eine derartige Vorrichtung sind aus der DE 42 29 865 C2 bekannt.

Herkömmliche Auswuchtmaschinen (z.B. Geodyna 5000 oder Geodyna 5500, Prospekt der Firma Hofmann Werkstatt-Technik GmbH, Pfungstadt, Impressum 9502101 03.94) besitzen verschiedene Ausgleichsprogramme. Durch diese Ausgleichsprogramme kann die Plazierung der Ausgleichsgewichte am Scheibenrad bestimmt werden. In üblicher Weise gibt es ein Standardprogramm für Scheibenräder aus Stahl und fünf wählbare Ausgleichsprogramme für Scheibenräder aus Leichtmetall, z.B. Aluminium. Hierdurch wird gewährleistet, daß in Abhängigkeit von dem Scheibenradtyp die Ausgleichsgewichte unter Berücksichtigung der Anforderungen an optimaler Laufruhe und optisches Aussehen des Rades beim Unwuchtausgleich positioniert werden. Die Wahl des entsprechenden Ausgleichsprogrammes erfolgt in Abhängigkeit von der visuellen Beurteilung des Kraftfahrzeugrades durch die Serviceperson. Eine Beurteilung nach dem Gewicht läßt sich in aller Regel nicht durchführen, da das Radgewicht im wesentlichen durch den aufgezogenen Reifen bestimmt wird. Hierbei kann es zu Fehlbeurteilungen kommen, so daß das falsche Ausgleichsprogramm gewählt wird.

Aus der DE-GM 1 801 947 ist eine Auswuchteinrichtung bekannt geworden, bei der nach Größe sortierte Ausgleichsgewichte in Behältern oder sonstigen Aufbewahrungsmitteln vorrätig gehalten sind. Nach einem Meßlauf, bei dem das für einen Prüfkörper erforderliche Ausgleichsgewicht bestimmt wird, wird der entsprechende dieses Ausgleichsgewicht enthaltende Behälter bzw. das Aufbewahrungsmittel durch eine jeweilige Markierungseinrichtung bezeichnet, um der Bedienperson den sofortigen Zugriff auf das richtige Ausglichsgewicht zu erleichtern.

Aus der DE 38 03 325 A1 ist ein Verfahren zum Auswuchten eines Kraftfahrzeugrades oder dergleichen bekannt geworden, bei dem ein auf eine Welle einer Auswuchtmaschine aufgespanntes, stillstehendes Rad in Schwingung versetzt wird und daraufhin radspezifische Daten, die aus Geberausgangssignalen von mit der Welle gekoppelten elektrischen Gebern erhalten werden, mit abgespeicherten, für unterschiedliche Scheibenräder charakteristischen Mustersignalen verglichen werden. Somit kann der jeweilige auszuwuchtende Radtyp bestimmt werden.

Aus der US 2,697,345 ist es bekannt geworden, beim Auswuchten von Rädern mit Stahlfelgen magnetische Test-Ausgleichsgewichte zu verwenden. Ein auszuwuchtendes, frei drehbares Rad dreht sich aufgrund seiner Unwucht schwerkraftbedingt in eine bestimmte Position. Ein oder mehrere magnetische Test-Ausgleichsgewichte werden zum Ausgleichen der Unwucht an dem Felgenhorn angebracht und anschließend durch übliche, dauerhafte Ausgleichsgewichte ersetzt.

Aufgabe der Erfindung ist es, ein Verfahren und eine Vorrichtung der eingangs genannten Art zu schaffen, bei denen die Gefahr der Fehlbeurteilung des Scheibenradtypes verringert ist.

Diese Aufgabe wird erfindungsgemäß beim Verfahren durch die kennzeichnenden Merkmale des Patentanspruches 1 und bei der Vorrichtung durch die kennzeichnenden Merkmale des Patentanspruches 9 gelöst.

Bei der Erfindung kommt eine Abtastung mit einem Sensor zur Anwendung, welche das Material des Scheibenrades erkennt. In Abhängigkeit von der Materialerkennung wählt die Maschine automatisch das richtige in ihr gespeicherte Ausgleichsprogramm an. Hierdurch wird erreicht, daß ohne Fehlbeurteilung durch die Serviceperson die Bestimmung des Ausgleichsvektors bzw. der Ausgleichsvektoren (Ausgleichsmasse und -position) mit dem in Abhängigkeit von der Materialerkennung von der Maschine ausgewählten Ausgleichsprogramm durchgeführt wird. Hierbei unterscheidet der Materialsensor, ob das Scheibenrad des Kraftfahrzeugrades aus einem nicht-ferromagnetischen Material, insbesondere Leichtmetall, z.B. Al, Mg oder Ti bzw. Legierungen und Mischlegierungen davon besteht oder aus einem ferromagnetischen Material, insbesondere Stahl. Fehler aufgrund visueller Fehlbeurteilungen der Serviceperson, welche darauf beruhen können, daß bei einer Farbgebung des Scheibenrades aus Stahl nach Art eines Leichtmetallscheibenrades oder im umgekehrten Falle, bei welchem das Leichtmetallrad wie ein Stahlrad aussieht, ergeben sich nicht mehr. Daraus ergibt sich die Voraussetzung für die Wahl des richtigen Ausgleichsprogrammes bei der Bestimmung des Ausgleichsvektors. Es kann daher beispielsweise nicht der Fall auftreten, daß für Stahlfelgen bestimmte Klammergewichte in die Felgenhörner von Leichtmetallfelgen eingeschlagen werden. Hierdurch ist die Gefahr der Beschädigung von Leichtmetallfelgen aufgrund falscher Beurteilung des Rades vermieden.

In vielen Fällen, wie beispielsweise bei den oben genannten Maschinentypen Geodyna 5000 und Geodyna 5500 beinhaltet das Ausgleichsprogramm für Leichtmetallräder unterschiedliche Programme für die Plazierung der Ausgleichsgewichte. Diese Auswahl erfolgt in aller Regel in Abhängigkeit von der Form der Felge des Scheibenrades. Wie bei den bekannten Maschinen können in dem von dem Materialsensor ausgelösten Schaltzustand der Maschinenelektronik, bei welchem das Programm für Leichtmetall-scheibenräder initiiert ist, die verschiedenen Programme, beispielsweise fünf Programme, die unterschiedliche Gewichtsplazierungen für das Rad zeigen, durch eine Anzeige an der Maschine, beispielsweise an einem Monitor oder an einem LC-Display für die Serviceperson kenntlich gemacht werden.

Die Abtastung mit dem Sensor kann durch Berührung oder berührungslos erfolgen, wobei entweder eine galvanische oder kapazitive oder induktive Kopplung oder eine wahlweise Kombination aus diesen Kopplungsarten an das Scheibenradmaterial erfolgen kann. Die Erkennungskriterien sind ein ferromagnetisches Material, insbesondere für Stahlräder, und nicht-ferromagnetisches Material für Leichtmetallräder.

Hierzu kann in bevorzugter Weise ein auf ein ferromagnetisches Material ansprechender Sensor, der insbesondere nur auf ferromagnetisches Material anspricht, z.B. ein induktiver Näherungsschalter, verwendet werden, der in die Nähe oder in Berührung mit dem abzutastenden Scheibenrad gebracht wird. Der Näherungsschalter kann in bekannter Weise ausgebildet sein (z.B. "Elektrotechnik" 57, H. 24.27.Dezember 1975, Seiten 39 bis 42). Bekannte Näherungsschalter dienen zur Erfassung eines Gegenstandes an einem bestimmten Ort. Im Gegensatz dazu wird bei der Erfindung der induktive Näherungsschalter zur Unterscheidung unterschiedlicher Scheibenradmaterialien bei Kraftfahrzeugrädern verwendet, wobei durch einen Schaltzustand angezeigt wird, daß das Scheibenrad aus einem ferromagnetischen Material, insbesondere Stahl, besteht und durch den anderen Schaltzustand des Näherungsschalters angegeben wird, daß das Scheibenrad aus nicht-ferromagnetischem Material, insbesondere Leichtmetall, besteht. In Abhängigkeit von diesen beiden Schaltzuständen wird in der Maschinenelektronik das entsprechende Ausgleichsprogramm für ein Leichtmetallrad oder ein Stahlrad ausgewählt und der dazu gehörige Ausgleichsvektor, welcher die Ausgleichsmasse und die Ausgleichsposition (Winkellage) und in axialer Richtung der Meßwelle die Ausgleichsebene beinhaltet, am Scheibenrad bestimmt. Wenn statisch ausgewuchtet wird, genügt ein Ausgleichsvektor, und bei einem dynamischen Unwuchtausgleich werden für jede der beiden Ausgleichsebenen ein Ausgleichsvektor bestimmt. Im Falle eines Leichtmetallrades kann der Ausgleichsvektor in zwei hinter den Speichen positionierte Ausgleichsvektoren aufgesplittet werden, wenn das Scheibenrad Unterbrechungen in der Scheibenschüssel mit verbleibenden Stegen oder Speichen aufweist. Diese Aufsplittung des Ausgleichsvektors erfolgt bevorzugt in der der Schüsselebene bzw. den Speichen nächstliegenden Ausgleichsebene (EP 0 681 170 A1).

Der Materialsensor, insbesondere induktive Näherungsschalter, kann an einem ohnehin an der Auswuchtmaschine vorhandenen Bauteil, welches in die Nähe des Scheibenrades gebracht werden kann, angeordnet sein. Hierzu eignet sich insbesondere eine Abtasteinrichtung, beispielsweise in Form einer Taststange (DE 42 29 865 C2) oder die Anordnung an der Radschutzhaube der Auswuchtmaschine oder dem Haltebügel hierfür. Ferner eignet sich hierfür der Bereich der Meßwelle, an welchem das Kraftfahrzeugrad auf die Meßwelle aufgespannt wird, oder ein Teil der Aufspanneinrichtung, mit welchem das Kraftfahrzeugrad auf der Meßwelle festgespannt wird. In vorteilhafter Weise kann der jeweilige Schaltzustand des Materialsensors angezeigt werden, so daß die Serviceperson für das Aufspannen die geeigneten Aufspannwerkzeuge verwendet. Hierzu kann beispielsweise der Drucktopf zur Mittenzentrierung eines Leichtmetallrades zusätzlich mit einer Schutzkappe, insbesondere aus Kunststoff, versehen sein oder ein spezieller Andrückteller verwendet werden (Geodyna 5000/5500, Prospekt Hofmann Werkstatt-Technik GmbH, Pfungstadt, Impressum 9502101 03.94). Bei der Kombination der Auswuchtmaschine mit einer Reifenmontiermaschine, z.B. innerhalb einer Räderservicestraße (ecomont system Prospekt der Firma Hofmann Werkstatt-Technik, Pfungstadt, Impressum 9402424 07.95), kann die Abtastung mit dem Materialsensor bereits an der Reifenmontiermaschine durchgeführt werden, wobei nicht nur beim Einspannen in die Montiermaschine eine das Rad schonende Befestigung erreicht wird, sondern auch beim Festspannen auf der Meßwelle der Auswuchtmaschine. Die bei der Reifenmontiermaschine gewonnene Materialerkennung kann in vorteilhafter Weise auch bei der Bestimmung des Ausgleichsprogrammes und der Art der Ausgleichsgewichte als Ausführungsbeispiel der Erfindung verwendet werden.

Zur Erleichterung der Servicearbeit kann ferner in Abhängigkeit von ermitteltem Scheibenradmaterial der Service-Person, beispielsweise durch eine Anzeige an einem Monitor oder Display oder dergl., die Gewichteart, welche in der jeweiligen Ausgleichsebene einzusetzen ist, angezeigt werden. Es kann hierfür eine Anzeige beispielsweise für ein Klebegewicht, ein Klammergewicht oder, falls beide Gewichte beim Ausgleichsprogramm eingesetzt werden sollen, eine Anzeige für beide Gewichte mit den zugeordneten Ausgleichsebenen vorgesehen werden. Ferner ist es möglich, die verschiedenen Arten der Ausgleichsgewichte in unterschiedlichen Fächern oder Magazinen in Bereitschaft zu halten und in Abhängigkeit von dem ermittelten Scheibenradmaterial einen Zugang nur für die Art des Ausgleichsgewichtes vorzusehen, die zum ausgewählten Ausgleichsprogramm und/oder die jeweilige Ausgleichsebene gehört.

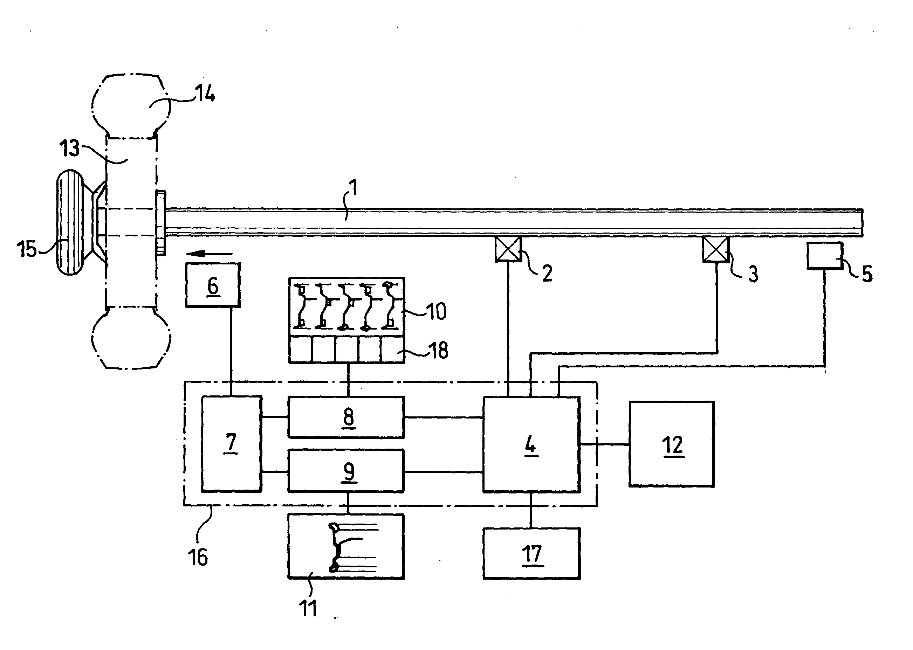

Anhand der Figur, in welcher schematisch ein Ausführungsbeispiel dargestellt ist, wird die Erfindung noch näher erläutert.

Auf einer Meßwelle 1 einer im einzelnen nicht näher dargestellten Auswuchtmaschine ist mit Hilfe einer Spanneinrichtung 15, welche gleichzeitig Zentrierfunktion hat, ein Kraftfahrzeugrad, bestehend aus Scheibenrad 13 und aufgezogenem Reifen 14, befestigt. An der Meßwelle 1 sind Meßwertgeber 2 und 3, beispielsweise Kraftwandler, vorgesehen. Die jeweilige Drehwinkellage der Meßwelle 1 wird mit Hilfe eines Winkelinkrementalgebers 5 festgestellt. Die Meßwertgeber 2 und 3 sowie der Winkelinkrementalgeber 5 sind in bekannter Weise an eine einen Vektorrechner 4 enthaltende Maschinenelektronik 16 angeschlossen. In die Maschinenelektronik 16, insbesondere den Vektorrechner 4, werden ferner Geometriedaten des Kraftfahrzeugrades, die mit Hilfe einer Abtasteinrichtung 17 erfaßt worden sind, eingegeben. Die Abtasteinrichtung 17 kann in bekannter Weise ausgebildet sein. Sie kann berührungslos (optisch, akustisch, insbesondere Ultraschall oder dergl.) oder durch abtastende Berührung, beispielsweise mit Hilfe einer oder mehrerer Taststangen, die Abmessungen des Kraftfahrzeugrades, insbesondere die Bereiche, in denen Ausgleichsgewichte positioniert werden können, erfassen.

Der Vektorrrechner 4 bestimmt aus den Meßsignalen der Meßwertgeber 2 und 3, der Winkelinformation des Winkelinkrementalgebers 5 und aus den Geometriedaten des Kraftfahrzeugrades für eine jeweilige Ausgleichsebene des Kraftfahrzeugrades einen Ausgleichsvektor. Der Ausgleichsvektor gibt zur Kompensation der ermittelten Unwucht des Rades die Ausgleichsmasse sowie die Winkellage der Ausgleichsmasse am Kraftfahrzeugrad, insbesondere am Scheibenrad 13, an. Der Ausgleichsvektor hängt ferner von der jeweiligen axialen Lage der Ausgleichsebene, in welcher der Massenausgleich, beispielsweise durch Befestigen eines Gewichtes, erfolgt, ab. Die optimale Lage der jeweiligen Ausgleichsebene am Scheibenrad 13 hängt von Radtyp, insbesondere Scheibenradtyp, ab. In Abhängigkeit vom Scheibenradtyp erfolgt die Berechnung des Ausgleichsvektors nach einem bestimmten Ausgleichsprogramm entweder für Stahlräder oder Leichtmetallräder.

Für die korrekte Bestimmung des Ausgleichsprogramms ist ein Materialsensor 6 vorgesehen. Dieser Materialsensor kann in Berührung mit dem Scheibenrad 13 gebracht werden, wobei der Materialsensor 6 so ausgebildet ist, daß er sensitiv ist nur für ein ferromagnetisches Material, insbesondere Stahl. Hierzu kann der Materialsensor 6 beispielsweise als induktiver Näherungsschalter in bekannter Weise ausgebildet sein. Wenn der Materialsensor 6 auf das Material des Scheibenrades anspricht, ist dies ein Zeichen dafür, daß dieses aus ferromagnetischem Material und somit, wie bei Scheibenrädern für Kraftfahrzeugräder üblich, aus Stahl besteht. Wenn der Materialsensor 6 auf das Material des Scheibenrades 13 nicht anspricht, ist dies ein Anzeichen dafür, daß das Scheibenrad aus nicht-ferromagnetischem Material, nämlich aus einem bei Scheibenrädern üblichen Leichtmetall, z.B. Al, Mg, Ti oder Legierungen bzw. Mischlegierungen davon, besteht. In vielen Fällen ist aus dem optischen Erscheinungsbild der Felge nicht erkennbar, aus welchem Material sie hergestellt ist. Auch das Gewicht des Kraftfahrzeugrades bietet bei aufgezogenem Reifen kein Kriterium für das Material des Scheibenrades. Durch die Erfindung wird ein Hilfsmittel geschaffen, mit welchem diese Unsicherheit bei der Anwahl des richtigen Ausgleichsprogrammes beseitigt ist.

Hierzu ist beim Ausführungsbeispiel der Materialsensor 6 über einen Initiator 7 an eine Einrichtung 8 für ein Ausgleichsprogramm für Kraftfahrzeugräder mit Leichtmetallscheibenräder und eine Einrichtung 9 für ein Ausgleichsprogramm für Kraftfahrzeugräder mit Stahlscheibenräder angeschlossen. Der Initiator stellt aufgrund einer Ja/Nein-Entscheidung einen der beiden Schaltzustände her. Wenn der Materialsensor 6 ein ferromagnetisches Material des Scheibenrades 13 feststellt, wird die Einrichtung 9 initiiert.

Wenn der Materialsensor 6 kein ferromagnetisches Material feststellt, wird die Einrichtung 8 initiiert. Mit der Einrichtung 8 und der Einrichtung 9 können entsprechende Anzeigen für ein sogenanntes Alu-Programm für Leichtmetallräder und ein Normalprogramm für Stahlfelgen angeschlossen sein. Wie aus der Anzeige 10 für das Alu-Programm zu ersehen ist, beinhaltet das Alu-Programm mehrere Ausgleichsprogramme, die mit Hilfe einer Tastatur 18 bestimmt werden können. Die einzelnen Ausgleichsprogramme unterscheiden sich durch die Positionierung der Ausgleichsgewichte und die Art der Ausgleichsgewichte (Klammergewichte, Klebegewichte). Beispielsweise befinden sich bei einem ersten Ausgleichsprogramm Klebegewichte an der der Radachse zugekehrten Felgenfläche außerhalb und innerhalb der zur Radachse vertikalen Scheibenradfläche. Bei einem zweiten Ausgleichsprogramm befinden sich beide Klebegewichte an der der Radachse zugekehrten Felgenfläche innerhalb der zur Radachse senkrechten Scheibenradfläche. Bei dem dritten Ausgleichsprogramm wird am inneren Felgenhorn ein Klammergewicht und an der inneren der Radachse zugekehrten Felgenfläche in der Nähe der vertikalen Scheibenradfläche ein Klebegewicht vorgesehen. Beim vierten Ausgleichsprogramm wird am inneren Felgenhorn ein Klammergewicht und an der außen liegenden der Radachse zugekehrten Felgenfläche ein Klebegewicht vorgesehen. Bei dem fünften Ausgleichsprogramm wird am außen liegenden Felgenhorn ein Klammergewicht und an der innen liegenden der Radachse zugekehrten Felgenfläche in der Nähe des inneren Felgenhorns ein Klebegewicht befestigt. In Abhängigkeit von der Felgen- und/oder Scheibenradform kann mit Hilfe der Tastatur 18, welche an die Anzeigeeinrichtung 10 und die Einrichtung 8 gekoppelt ist, das entsprechende Ausgleichsprogramm in der Einrichtung 8 für die Bestimmung des Ausgleichsvektors im Vektorrechner 4 angewählt werden.

Im Normalprogramm werden, wie es die Anzeige 11 für das Stahlprogramm zeigt, zwei Klammergewichte in den beiden Felgenhörnern der Stahlfelge befestigt. Dieses Ausgleichsprogramm ist für den Unwuchtausgleich an Stahlfelgen geeignet, und der Vektorrechner 4 ermittelt, falls dieses Ausgleichsprogramm eingestellt ist, die für den Unwuchtausgleich erforderlichen Ausgleichsvektoren.

Die jeweils berechneten Ausgleichsvektoren können in bekannter Weise mit Hilfe einer Anzeigeeinrichtung 12 angezeigt werden. Die Anzeigeeinrichtung enthält hierfür für eine jeweilige Ausgleichsebene die Ausgleichsmasse und Anzeigen für die Winkellage, in welche das Kraftfahrzeugrad für den Unwuchtausgleich eingedreht werden soll.

Geeignete Stellen für die Anordnung des Materialsensors 6 sind solche Bauteile der Auswuchtmaschine, welche in der Nähe des aufgespannten Kraftfahrzeugrades angeordnet sind oder in die Nähe des Scheibenrades oder in Berührung mit dem Scheibenrad gebracht werden können. Hierbei handelt es sich beispielsweise um den Bereich der Meßwelle 1, auf welchen das Kraftfahrzeugrad aufgespannt wird. Ferner kann die Spanneinrichtung 15 den Materialsensor 6 beinhalten. Es ist auch möglich, daß Abtaststangen, welche von innen und/oder außen an das Scheibenrad anlegbar sind und beispielsweise Bestandteil der Abtasteinrichtung 17 sind, mit dem Materialsensor 6 versehen sind. Ferner ist es möglich, den Materialsensor 6 an der nicht näher dargestellten Radschutzhaube, welche während des Meßlaufs über das Kraftfahrzeugrad gestülpt wird oder am Befestigungsbügel für diese Radschutzhaube anzuordnen.

## Patentansprüche

1. Verfahren zum Auswuchten eines aus Luftreifen und Scheibenrad bestehenden Kraftfahrzeugrades, bei dem das Kraftfahrzeugrad auf eine Meßspindel einer Auswuchtmaschine aufgespannt wird, die geometrischen Daten des Rades abgetastet und gespeichert werden, wenigstens ein Meßlauf zur Ermittlung einer Unwucht und Bestimmung wenigstens eines Ausgleichsvektors für die Ausgleichsmasse und die Ausgleichsposition nach einem in Abhängigkeit vom Scheibenradtyp und Scheibenradmaterial ausgewählten Ausgleichsprogramm für die Bestimmung des wenigstens einen Ausgleichsgewichtes und seiner Positionierung in wenigstens einer Ausgleichsebene am Kraftfahrzeugrad ausgewählt wird und für das so gewählte Ausgleichsprogramm der Ausgleichsvektor bestimmt wird und wenigstens ein Ausgleichsgewicht in Abhängigkeit vom Ausgleichsvektor zur Kompensation der ermittelten Unwucht am Kraftfahrzeugrad befestigt wird,
**dadurch gekennzeichnet** ,
daß zur Erkennung des Materials des Scheibenrades eine Abtastung mit einem Sensor durchgeführt wird, wobei der Sensor unterscheidet, ob das Scheibenrad aus einem nicht ferromagnetischen Material, insbesondere Leichtmetall, oder aus einem ferromagnetischen Material, insbesondere Stahl besteht, und daß in Abhängigkeit von dem bei der Abtastung mit dem Sensor gewonnenen Signal das Ausgleichsprogramm gewählt wird.

2. Verfahren nach Anspruch 1, **dadurch gekennzeichnet**, daß die Abtastung durch Berührung oder berührungslos erfolgt.

3. Verfahren nach Anspruch 1 oder 2, **dadurch gekennzeichnet**, daß die Abtastung durch kapazitive oder induktive oder durch galvanische, berührende Kopplung an das Scheibenmaterial erfolgt.

4. Verfahren nach einem der Ansprüche 1 bis 3, **dadurch gekennzeichnet**, daß bei der Abtastung ein auf ferromagnetisches Material ansprechender Sensor, insbesondere induktiver Näherungsschalter, verwendet wird.

5. Verfahren nach einem der Anspruche 1 bis 4, **dadurch gekennzeichnet**, daß in Abhängigkeit von der Materialabtastung das Ausgleichsprogramm auf ein Programm für Leichtmetall-Scheibenräder oder auf ein Normalprogramm für Stahl-Scheibenräder geschaltet wird.

6. Verfahren nach einem der Ansprüche 1 bis 5, **dadurch gekennzeichnet**, daß die Maschinenelektronik automatisch auf das Standardprogramm für Stahl-Scheibenräder oder auf eine Anzeige, welche die Ausgleichsprogramme für die Leichtmetall-Scheibenräder für eine Auswahl von Hand angibt, geschaltet wird.

7. Verfahren nach einem der Ansprüche 1 bis 6, **dadurch gekennzeichnet**, daß in Abhängigkeit vom ermittelten Scheibenradmaterial und dem Ausgleichsprogramm die in die jeweiligen Ausgleichsebenen einzusetzenden Arten der Ausgleichsgewichte (Klebegewichte, Klammergewichte) angezeigt werden.

8. Verfahren nach einem der Ansprüche 1 bis 7, **dadurch gekennzeichnet**, daß die Art des jeweils einzusetzenden Ausgleichsgewichts für eine Entnahme aus einer Einrichtung, in welcher die Gewichte in Bereitschaft gehalten werden, freigegeben werden.

9. Vorrichtung zum Durchführen des Verfahrens nach Anspruch 1 mit einer Meßspindel, auf welche das auszuwuchtende Rad mittels einer Spanneinrichtung zentriert befestigbar ist, mit der Meßspindel verbundenen Meßwertgebern, die in Abhängigkeit von einer durch Fliehkraftmessung ermittelten Radunwucht Meßsignale abgeben, einer Abtasteinrichtung zum Abtasten geometrischer Daten des Rades, einer Maschinenelektronik, welche aus den in einem Meßlauf gewonnenen Meßsignalen der Meßwertgeber und den geometrischen Daten des Rades wenigstens einen Ausgleichsvektor für die Ausgleichsmasse und die Ausgleichsposition am Scheibenrad in Abhängigkeit von einem gemäß dem Scheibenradtyp eingestellten Ausgleichsprogramm bildet,
**dadurch gekennzeichnet,**
daß mit der Maschinenelektronik (16) ein Materialsensor (6) verbunden ist, mit welchem das an der Meßwelle (1) befestigte Scheibenrad (13) abtastbar ist und welcher zwei Schaltzustände der Maschinenelektronik (16) auslöst, von denen der eine Schaltzustand eine Einrichtung (4, 8) zum Berechnen des Ausgleichsvektors nach einem Normalprogramm für Stahl-Scheibenräder und der andere Zustand eine Einrichtung (4, 9) zum Berechnen des Ausgleichsvektors für Leichtmetall-Scheibenräder initiiert.

10. Vorrichtung nach Anspruch 9, **dadurch gekennzeichnet**, daß der Materialsensor (6) auf ferromagnetisches Material anspricht.

11. Vorrichtung nach Anspruch 9 oder 10, **dadurch gekennzeichnet**, daß der Materialsensor (6) als induktiver Näherungsschalter ausgebildet ist.

12. Vorrichtung nach einem der Ansprüche 9 bis 11, **dadurch gekennzeichnet**, daß der Materialsensor (6) an der Abtasteinrichtung (17) zum Abtasten der Geometriedaten des Rades angeordnet ist.

13. Vorrichtung nach einem der Ansprüche 9 bis 11, **dadurch gekennzeichnet**, daß der Materialsensor (6) am Radschutz der Vorrichtung vorgesehen ist.

14. Vorrichtung nach einem der Ansprüche 9 bis 11, **dadurch gekennzeichnet**, daß der Materialsensor (6) an der Spanneinrichtung (15) oder der Meßwelle (1) im Bereich des befestigten Scheibenrades (13) angeordnet ist.

15. Vorrichtung nach einem der Ansprüche 9 bis 14, **dadurch gekennzeichnet**, daß eine Anzeige (10, 11) für den jeweiligen Schaltzustand des Materialsensors (6) vorgesehen ist.

## Claims

1. A method of balancing a motor vehicle wheel comprising a pneumatic tyre and a disc wheel, wherein the motor vehicle wheel is clamped on to a measuring spindle of a balancing machine, the geometrical data of the wheel are sensed and stored, at least one measuring run is effected for ascertaining an unbalance and determining at least one balancing vector for the balancing mass and the balancing position in accordance with a balancing program which is selected in dependence on the disc wheel type and the disc wheel material, for determining the at least one balancing weight and its positioning in at least one balancing plane on the motor vehicle wheel and the balancing vector is determined for the balancing program selected in that way and at least one balancing weight is fixed to the motor vehicle wheel in dependence on the balancing vector for compensation of the ascertained unbalance, **characterised in that** to detect the material of the disc wheel a sensing operation is effected with a sensor, wherein the sensor distinguishes whether the disc wheel comprises a non-ferromagnetic material, in particular light metal or alloy, or a ferromagnetic material, in particular steel, and that the balancing program is selected in dependence on the signal obtained in the sensing operation with the sensor.

2. A method according to claim 1 **characterised in that** the sensing operation is effected by contact or in a contact-less mode.

3. A method according to claim 1 or claim 2 **characterised in that** the sensing operation is effected by capacitive or inductive or by galvanic contacting coupling to the disc material.

4. A method according to one of claims 1 to 3 **characterised in that** in the sensing operation a sensor responsive to ferromagnetic material, in particular an inductive proximity switch, is used.

5. A method according to one of claims 1 to 4 **characterised in that** in dependence on the material sensing procedure the balancing program is switched to a program for light metal or alloy disc wheels or to a normal program for steel disc wheels.

6. A method according to one of claims 1 to 5 **characterised in that** the electronic system of the machine is automatically switched to the standard program for steel disc wheels or to a display which gives the balancing programs for the light metal or alloy disc wheels for manual selection.

7. A method according to one of claims 1 to 6 **characterised in that** the kinds of balancing weights to be fitted into the respective balancing planes (adhesive weights, clip-on weights) are displayed in dependence on the disc wheel material ascertained and the balancing program.

8. A method according to one of claims 1 to 7 **characterised in that** the nature of the respective balancing weight to be used is enabled for removal from a device in which the weights are kept in readiness.

9. Apparatus for carrying out the method according to claim 1 comprising a measuring spindle on which the wheel to be balanced can be fixed in a centred condition by means of a clamping device, measurement value sensors which are connected to the measuring spindle and which output measurement signals in dependence on a wheel unbalance which is ascertained by centrifugal force measurement, a sensing means for sensing geometrical data of the wheel, and an electronic machine system which, from the measurement signals of the measurement value sensors obtained in a measuring run and the geometrical data of the wheel, forms at least one balancing vector for the balancing mass and the balancing position on the disc wheel in dependence on a balancing program which is set in accordance with the type of disc wheel, **characterised in that** connected to the electronic machine system (16) is a material sensor (6) with which the disc wheel (13) secured to the measuring shaft (1) can be sensed and which triggers two switching conditions of the electronic machine system (16), of which the one switching condition initiates a device (4, 8) for computing the balancing vector in accordance with a normal program for steel disc wheels and the other condition initiates a device (4, 9) for computing the balancing vector for light metal or alloy disc wheels.

10. Apparatus according to claim 9 **characterised in that** the material sensor (6) is responsive to ferromagnetic material.

11. Apparatus according to claim 9 or claim 10 **characterised in that** the material (6) is in the form of an inductive proximity switch.

12. Apparatus according to one of claims 9 to 11 **characterised in that** the material sensor (6) is arranged on the sensing device (17) for sensing the geometrical data of the wheel.

13. Apparatus according to one of claims 9 to 11 **characterised in that** the material sensor (6) is provided on the wheel guard of the apparatus.

14. Apparatus according to one of claims 9 to 11 **characterised in that** the material sensor (6) is arranged at the clamping device (15) or the measuring shaft (1) in the region of the disc wheel (13) fixed thereon.

15. Apparatus according to one of claims 9 to 14 **characterised in that** there is provided a display (10, 11) for the respective switching condition of the material sensor (6).

## Revendications

1. Procédé d'équilibrage du balourd d'une roue de véhicule automobile constituée d'un pneumatique et d'une roue pleine, qui consiste à bloquer la roue du véhicule automobile sur une broche de mesure d'une machine d'équilibrage de balourd, à détecter et à mémoriser les données géométriques de la roue, à choisir au moins une mesure pour la détermination d'un balourd et la définition d'au moins un vecteur de compensation pour la masse de compensation et la position de compensation suivant un programme de compensation choisi en fonction du type de la roue pleine et du matériau de la roue pleine, afin de déterminer la au moins une masselotte de compensation et sa position dans au moins un plan de compensation sur la roue du véhicule automobile et à déterminer pour le programme de compensation ainsi sélectionné le vecteur de compensation et à fixer une masselotte de compensation sur la roue du véhicule automobile en fonction du vecteur de compensation en vue de compenser le balourd qui a été déterminé,
**caractérisé**
en ce qu'il consiste à effectuer pour reconnaître le matériau de la roue pleine une détection à l'aide d'un capteur, le capteur distinguant si la roue pleine est en un matériau non ferromagnétique, notamment en métal léger, ou en un matériau ferromagnétique, notamment en acier et à sélectionner le programme de compensation en fonction du signal obtenu lors de la détecteur avec le capteur.

2. Procédé suivant la revendication 1, **caractérisé en ce qu**'il consiste à effectuer la détection avec contact ou sans contact.

3. Procédé suivant la revendication 1 ou 2, **caractérisé en ce qu**'il consiste à effectuer la détection par couplage avec contact capacitif ou inductif ou galvanique avec le matériau de roue.

4. Procédé suivant l'une des revendications 1 à 3, **caractérisé en ce qu**'il consiste, lors de la détection, à utiliser un capteur réagissant à un matériau ferromagnétique, notamment un capteur de proximité inductif.

5. Procédé suivant l'une des revendications 1 à 4, **caractérisé en ce qu**'en fonction de la détection du matériau le programme de compensation se branche sur un programme pour des roues pleines en métal léger ou sur un programme normal pour des roues pleines en acier.

6. Procédé suivant l'une des revendications 1 à 5, **caractérisé en ce que** l'électronique de la machine se branche automatiquement sur le programme standard, pour des roues pleines en acier ou sur un affichage pour une sélection manuelle qui indique les programmes de compensation pour les roues pleines en métal léger.

7. Procédé suivant l'une des revendications 1 à 6, **caractérisé en ce qu**'en fonction du matériau de roue pleine détecté et du programme de compensation on indique les types de masselotte de compensation (masselottes collées, masselottes à agrafes) à utiliser dans les plans de compensation respectifs.

8. Procédé suivant l'une des revendications 1 à 7, **caractérisé en ce que** le type de masselotte de compensation à utiliser est dégagé en vue d'être prélevé dans un dispositif dans lequel les masselottes sont tenues à disposition.

9. Dispositif pour la mise en oeuvre du procédé suivant la revendication 1, comprenant une broche de mesure sur laquelle la roue dont on doit corriger le balourd peut être fixée et de manière centrée au moyen d'un dispositif de fixation, des générateurs de valeurs de mesure qui sont reliés à la broche de mesure et qui, en fonction d'un balourd de roue déterminé par une mesure par force centrifuge, donnent des signaux de mesure, un dispositif de détection destiné à détecter des données géométriques de la roue, une électronique de mesure qui forme, à partir des signaux de mesure obtenus par une mesure au moyen des générateurs de valeurs de mesure et des données géométriques de la roue, au moins un vecteur de compensation pour la masse de compensation et la position de compensation sur la roue pleine en fonction d'un programme de compensation réglé suivant le type de roue pleine,
**caractérisé**
en ce qu'il est relié à l'électronique (16) de la machine un capteur (6) de matériau par lequel la roue (13) pleine fixée à l'arbre (1) de mesure peut être détectée et qui déclenche deux états de commutation de l'électronique (16) de la machine, l'un d'entre eux initiant un dispositif (4, 8) de calcul du vecteur de compensation suivant un programme normal pour des roues pleines en acier et l'autre un dispositif (4, 9) de calcul du vecteur de compensation pour des roues pleines en métal léger.

10. Dispositif suivant la revendication 9, **caractérisé en ce que** le capteur (6) de matériau réagit à du matériau ferromagnétique.

11. Dispositif suivant la revendication 9 ou 10, **caractérisé en ce que** le capteur (6) de matériau est constitué sous la forme d'un capteur inductif de proximité.

12. Dispositif suivant l'une des revendications 9 à 11, **caractérisé en ce que** le capteur (6) de matériau est monté sur le dispositif (17) de détection destiné à détecter les données géométriques de la roue.

13. Dispositif suivant l'une des revendications 9 à 11, **caractérisé en ce que** le capteur (6) de matériau est prévu sur la protection de roue du dispositif.

14. Dispositif suivant l'une des revendications 9 à 11, **caractérisé en ce que** le capteur (6) de matériau est monté sur le dispositif (15) de blocage ou sur l'arbre (1) de mesure dans la région de la roue (13) pleine qui est fixée.

15. Dispositif suivant l'une des revendications 9 à 14, **caractérisé en ce qu**'il est prévu un affichage (10, 11) pour chaque état de commutation du capteur (6) de matériau.
